# EUROPÄISCHE PATENTSCHRIFT

(11) **EP 0 585 690 B1**
(45) Veröffentlichungstag und Bekanntmachung des Hinweises auf die Patenterteilung: **10.05.2000**
(21) Anmeldenummer: 93112980.3
(22) Anmeldetag: 13.08.1993
(51) Int. Cl.: B23Q 1/25, B23Q 1/26, B23Q 1/60

(54) **Drehmaschine**
Lathe
Tour

(30) Priorität: 03.09.1992 DE 4229423
(43) Veröffentlichungstag der Anmeldung: 09.03.1994
(73) Patentinhaber: INDEX-WERKE GMBH & CO. KG HAHN & TESSKY, 73730 Esslingen (DE)
(72) Erfinder: Hack, Eberhard, D-73265 Dettingen/Teck (DE); Schleich, Günter, D-73269 Hochdorf (DE)
(74) Vertreter: Hoeger, Stellrecht & Partner

(56) Entgegenhaltungen:
- EP-A- 0 214 926
- EP-A- 0 239 564
- EP-A- 0 423 427
- DE-A- 3 626 929
- DE-A- 3 921 649
- DE-A- 3 937 330
- DE-A- 4 134 862
- DE-U- 9 200 400

## Beschreibung

Die Erfindung betrifft eine Drehmaschine gemäß dem Oberbegriff des Patentanspruchs 1 und wie z.B. aus DE-A-39 21 649 bekannt ist.

Derartige Drehmaschinen, wie sie beispielsweise aus der DE-A-30 35 451 oder der DE-A-35 14 069 bekannt sind, haben üblicherweise eine horizontale Zerspanungsebene, grundsätzlich können solche Drehmaschinen aber auch so gestaltet werden, daß die Zerspanungsebene vertikal verläuft oder gegenüber einer vertikalen Ebene um z.B. 30° geneigt ist (sogenannte Schrägbettmaschinen) - unter der Zerspanungsebene wird dabei diejenige Ebene verstanden, welche durch die Spindelachse und die Richtung der sogenannten X-Achse der Drehmaschine definiert wird, weil sich in dieser Ebene die Schneiden von in Arbeitsposition befindlichen Werkzeugen der beiden Werkzeugträger bewegen, wenn diese zur Verkleinerung des Durchmessers eines zu bearbeitenden Werkstücks parallel zur X-Achse in bezüglich der Spindelachse radialer Richtung auf die Spindelachse vorgeschoben werden.

Die sich aus den vorstehend zitierten Druckschriften ergebenden bekannten Drehmaschinen haben ein Maschinenbett mit einer horizontalen Oberseite, auf der vor und hinter der Spindelachse leistenförmige, sich parallel zur Spindelachsrichtung (Richtung der sogenannten Z-Achse der Drehmaschine) erstreckende Führungen (Z-Führungen) für die Bettschlitten zweier Kreuzschlittensysteme befestigt sind, deren jedes einen Werkzeugrevolver trägt. Da jedes der beiden Kreuzschlittensysteme dieser bekannten Drehmaschinen außer dem in Richtung der Z-Achse verschiebbaren Unter- oder Bettschlitten einen horizontal und senkrecht zur Spindelachsrichtung, d.h. in Richtung der X-Achse der Drehmaschine, verschiebbaren Oberschlitten aufweist, verläuft bei diesen bekannten Drehmaschinen die Zerspanungsebene horizontal und parallel zu den von der Maschinenbett-Oberseite gebildeten Auflage- und Befestigungsflächen für die Z-Führungen für die Bettschlitten. Dieses Konstruktionsprinzip hat eine ganze Reihe von Nachteilen: Da von den Werkzeugträgern gehaltene Werkzeuge in der Zerspanungsebene bewegbar sein müssen, d.h. auf einem durch die Lage der Spindelachse vorgegebenen Niveau über der Oberseite des Maschinenbetts, können die Bettschlitten nur die Gestalt einer relativ dünnen Platte haben, auf denen dann z.B. die Antriebsmotoren für den Antrieb der Oberschlitten der beiden Kreuzschlittensysteme aufgebaut werden müssen. Ferner liegen die Schlittenführungen, vor allem die auf dem Maschinenbett montierten Z-Führungen für die Bettschlitten, im Flugbereich der bei der Bearbeitung entstehenden Späne, was erhebliche Probleme bereitet, die nur mit aufwendigen Teleskopabdeckungen aus Metallblechen oder in unbefriedigender Weise mittels Abstreifern zu lösen sind. Besonders schwerwiegend wird das Späneproblem dann, wenn an den Z-Führungen für wenigstens einen der Bettschlitten auch noch ein sogenannter Reitstock, der Spindelstock einer Werkstückspindel und/oder eine Lünette geführt wird, da diese und der Bettschlitten unabhängig voneinander verschiebbar sein und einander abstandslos angenähert werden können müssen, was die Verwendung einer Teleskopabdeckung ausschließt.

Schließlich ist bei diesen bekannten Drehmaschinen auch eine Energiezuführungsleitung zum Bettschlitten des vor der Spindelachse liegenden Kreuzschlittensystems problematisch, weil eine solche Leitung im Flugbereich der bei der Werkstückbearbeitung anfallenden Späne liegt und quer durch den Arbeitsraum der Drehmaschine verläuft.

Aus der DE-39 21 649-A ist eine Drehmaschine der eingangs erwähnten Art bekannt geworden, bei der ein Teil der vorstehend geschilderten Nachteile vermieden oder abgemildet werden kann. Bei dieser bekannten Drehmaschine ist auf einer gegenüber der Horizontalen nach vorn (einer Bedienungsperson zu) und unten geneigten Oberseite einer Maschinenbasis ein sich in Richtung der Z-Achse erstreckendes Schlittenbett befestigt, auf dem oben Z-Führungen für einen in Richtung der Z-Achse verschiebbaren Bettschlitten eines oberen Kreuzschlittensystems befestigt sind, während eine Frontseite des Schlittenbetts, welche gegenüber einer vertikalen und sich in Richtung der Z-Achse erstreckenden Ebene nach unten und hinten geneigt ist, Z-Führungen für den Bettschlitten eines unteren Kreuzschlittensystems trägt. Der Bettschlitten des oberen Kreuzschlittensystems hat ganz grob die Gestalt einer verhältnismäßig dünnen Platte mit im Schnitt senkrecht zur Z-Achse sägezahnartig profilierter Unterseite und mit horizontaler Oberseite, auf welcher ein in horizontaler Richtung senkrecht zur Z-Achse verschiebbarer Y-Schlitten geführt ist, der eine vertikale und parallel zur Z-Achse verlaufende Frontseite besitzt, an der ein in vertikaler Richtung verschiebbarer X-Schlitten geführt ist; dieser trägt einen Werkzeugrevolver mit einer in Richtung der Z-Achse orientierten Schaltachse. Der Bettschlitten des unteren Kreuzschlittensystems hat einen ungefähr dreiecksförmigen Querschnitt (senkrecht zur Z-Achse) mit einer vertikal und parallel zur Z-Achse orientierten Frontseite, an der ein in vertikaler Richtung verschiebbarer X-Schlitten geführt ist, welcher gleichfalls einen Werkzeugrevolver mit zur Z-Achse paralleler Schaltachse trägt.

Bei dieser bekannten Drehmaschine ist die horizontal verlaufende Spindelachse einer Werkstückspindel, welche wiederum die Richtung der Z-Achse definiert, zwischen den übereinander liegenden Werkzeugrevolvern angeordnet, und die Zerspanaungsebene verläuft vertikal. Wegen der Neigung der Frontseite des Schlittenbetts nach hinten und unten können auf den Z-Führungen für den Bettschlitten des unteren Kreuzschlittensystems zwar kaum Späne liegen bleiben, jedoch muß eine Energiezufuhrleitung zum Bettschlitten des unteren Kreuzschlittensystems im Flugbereich der Späne liegen und in Richtung der Z-Achse durch den Arbeitsraum der Drehmaschine verlaufen. Außerdem müssen die Bettschlitten verhältnismäßig flach sein, weil auf dem oberen Bettschlitten der Y-Schlitten des oberen Kreuzschlittensystems aufgebaut ist und aus Stabilitätsgründen die Spindelachse nicht in einem großen horizontalen Abstand vor dem Schlittenbett angeordnet werden kann, wodurch die in Richtung der Y-Achse gemessene Dicke des unteren Bettschlittens begrenzt wird.

Alle vorstehend beschriebenen bekannten Drehmaschinen weisen noch einen weiteren gravierenden Nachteil auf, für dessen Verständnis zunächst erläutert werden muß, welche Kräfte bei einer unbeabsichtigten Kollision zwischen einem rotierenden, ein zu bearbeitendes Werkstück haltenden Spannfutter der Werkstückspindel und einem Werkzeug oder dem dieses tragenden Werkzeugträger (Werkzeugrevolver) auftreten: Diese Kräfte sind bezüglich der Spindelachse tangential und senkrecht zur Zerspanungsebene orientiert und wegen der im Vergleich zur Verschiebegeschwindigkeit eines Schlittens sehr hohen Umfangsgeschwindigkeit des Spannfutters entsprechend hoch.

Bei den vorstehend beschriebenen bekannten Drehmaschinen mit in einer horizontalen Ebene verschiebbaren Bettschlitten und horizontaler Zerspanungsebene verlaufen diese Kollisionskräfte also senkrecht zu der horizontalen, die beiden Bettschlitten tragenden Bettoberseite und führen deshalb zu bleibenden Maschinenschäden, da in dieser Richtung weder die die Bettschlitten führenden Z-Führungen, noch der die Werkstückspindel lagernde und auf die horizontale Bettoberseite aufgesetzte Spindelstock ausweichen kann. Derartige Kollisionen führen aber auch bei der Drehmaschine nach der DE-39 21 649-A zu bleibenden Maschinenschäden, u.z. aus folgendem Grund: Bei dieser bekannten Drehmaschine sind Bestandteile der Z-Führungen für die beiden Bettschlitten Führungsleisten, die sich in Richtung der Z-Achse erstrecken und quer hierzu einen Querschnitt haben, der einem flachen Rechteck entweder genau entspricht oder angenähert ist. In Richtung der Z-Achse gesehen verlaufen die breiteren Querflächen dieser Leisten für jeden Bettschlitten jeweils parallel zueinander, u.z. für den oberen Bettschlitten schräg nach vorn und unten und für den unteren Bettschlitten schräg nach hinten und unten. Eine Kollision, wie sie vorstehend beschrieben wurde, führt also in jedem Falle dazu, daß an jeder dieser Leisten beträchtliche Kräfte auftreten, welche in einer Richtung wirken, in der sich weder diese Leisten, noch der Spindelstock bewegen können.
Nichts anderes gilt für die Kräfte, welche bei einer Kollision zwischen einem Werkzeug oder Werkzeughalter eines sich zum Schalten gerade drehenden Werkzeugrevolvers und einem Werkstück, einer Werkstückspindel oder deren Spindelstock auftreten.

Der Erfindung lag nun die Aufgabe zugrunde, eine verbesserte Drehmaschine der eingangs erwähnten Art zu schaffen, deren Konstruktionsprinzip im Vergleich zu der sich aus der DE-A-39 21 649 ergebenden Konstruktion für beide Bettschlitten mehr Platz zur Verfügung stellt, ohne dadurch das aus Stabilitätsgründen angestrebte Ziel eines möglichst geringen Abstandes zwischen Schlittenbett und Zerspanungsebene zu verfehlen.

Bei der Lösung dieser Aufgabe wurde ausgegangen von einer Drehmaschine mit einer Maschinenbasis, wenigstens einem Spindelstock, in dem eine Werkstückspindel zum Halten eines zu bearbeitenden Werkstücks um eine die Richtung einer Z-Achse der Drehmaschine definierende Spindelachse drehbar gelagert ist, einem mit der Maschinenbasis fest verbundenen Schlittenbett, welches sich in Richtung der Z-Achse erstreckende Längsseiten besitzt, und mit wenigstens zwei an Schlittenbettlängsseiten in Richtung der Z-Achse verschiebbar gehaltenen Werkzeugträger-Schlittensystemen, deren jedes einen am Schlittenbett in Richtung der Z-Achse geführten Bettschlitten sowie mindestens einen weiteren, in Richtung einer derart senkrecht zur Z-Achse verlaufenden X-Achse der Drehmaschine verschiebbaren Schlitten aufweist, daß ein Werkzeug eines von dem betreffenden Schlittensystem gehaltenen Werkzeugträgers parallel zur X-Achse in bezüglich der Spindelachse radialer Richtung verschiebbar ist und die Spindelachse mit der Richtung der X-Achse eine Zerspanungsebene definiert, welche mit einer durch die Spindelachse verlaufenden horizontalen Ebene einen Winkel von mindestens ca. 45° und höchstens ca. 90° bildet, wobei an zwei Längsseiten des Schlittenbetts jeweils zwei sich in Richtung der Z-Achse erstreckende Z-Führungen für jeweils einen dieser Bettschlitten vorgesehen sind, d.h. von einer Drehmaschine, wie sie die DE-39 21 649-A offenbart; zur Lösung der Aufgabe wird erfindungsgemäß vorgeschlagen, eine solche Drehmaschine so zu gestalten, daß das Schlittenbett derart ausgebildet ist, daß - in Richtung der Z-Achse gesehen - die beiden Bettschlitten auf voneinander abgewandten Längsseiten des Schlittenbetts angeordnet sind, wobei - von oben in Richtung der X-Achse gesehen - der eine Bettschlitten über dem Schlittenbett und der andere Bettschlitten unter dem Schlittenbett angeordnet ist, und daß die mit den beiden Z-Führungen für den einen Bettschlitten versehenen Bereiche der einen Längsseite des Schlittenbetts sowohl parallel zueinander, als auch parallel zu den mit den beiden Z-Führungen für den anderen Bettschlitten versehenen Bereichen der anderen Längsseite des Schlittenbetts sowie quer zur Zerspanungsebene verlaufen.

Bei einer erfindungsgemäßen Drehmaschine kann jeder der beiden Bettschlitten in Richtung senkrecht zu der ihn tragenden Längsseite des Schlittenbetts erheblich größer bemessen werden als bei den vorstehend beschriebenen bekannten Drehmaschinen, so daß es ohne weiteres möglich ist, wenigstens einen der beiden Bettschlitten so zu gestalten, daß er ein Gehäuse zur Aufnahme wenigstens eines Maschinenteils bildet und insbesondere einen Antriebsmotor zum Verschieben eines von diesem Bettschlitten getragenen weiteren Schlittens aufnimmt. Bei einer erfindungsgemäßen Drehmaschine muß also keiner der Bettschlitten als flaches Gebilde gestaltet werden, um Werkzeuge in die Zerspanungsebene bringen zu können und ungünstig große Momente infolge der beim Bearbeiten eines Werkstücks auftretenden Kräfte zu vermeiden; ferner sind die im Inneren eines Bettschlittens angeordneten Maschinenteile geschützt untergebracht, und bei Anordnung eines Antriebsmotors innerhalb eines Bettschlittens treten beim Beschleunigen und Abbremsen des Bettschlittens weit geringere Trägheitsmomente auf als in Fällen, bei denen ein solcher Antriebsmotor auf der vom Schlittenbett abgewandten Seite des Bettschlittens montiert ist. Auch können auf derjenigen Längsseite des Schlittenbetts, an der der untere Bettschlitten geführt ist, Späne, soweit sie überhaupt dorthin gelangen, nicht liegenbleiben, so daß eine Teleskopabdeckung oder dergleichen nicht erforderlich ist.

Besonders vorteilhaft sind Ausführungsformen der erfindungsgemäßen Drehmaschine, bei denen das Schlittenbett an seinen die beiden Bettschlitten tragenden Längsseiten ebene, sich in Richtung der Z-Achse erstreckende Befestigungsflächen aufweist, auf denen die Z-Führungen befestigt sind, wobei alle diese Befestigungsflächen quer zur Zerspanungsebene und parallel zueinander verlaufen. Bei einer solchen Drehmaschine führen bezüglich der Spindelachse tangential ausgerichtete und senkrecht zur Zerspanungsebene orientierte Kollisionskräfte äußerstenfalls zu einer Verschiebung eines Bettschlittens samt seiner Z-Führungen gegenüber den Befestigungsflächen des Schlittenbetts, jedoch nicht zu schweren Beschädigungen der Maschine, so daß es verhältnismäßig einfach ist, die Z-Führungen neu zu justieren und am Schlittenbett festzulegen. Hinzu kommt, daß sich ebene und zu einander parallele Befestigungsflächen am Schlittenbett leichter präzise herstellen lassen als Befestigungsflächen, deren Ebenen miteinander Winkel bilden.

Aus der EP-0 239 564-A2 geht eine Drehmaschine mit einer gegenüber der Vertikalen um ca. 40° nach hinten geneigten Zerspanungsebene und mit einem Maschinenbett hervor, welches eine obere Längsseite besitzt, die sich in Richtung der Z-Achse erstreckt, senkrecht zur Zerspanungsebene verläuft und daher nach hinten und unten geneigt ist und eine Z-Führung für den Bettschlitten eines einen Werkzeugrevolver tragenden Schlittensystems trägt. Des weiteren besitzt das Maschinenbett eine an seine obere Längsseite angrenzende vordere Längsseite, welche sich ebenfalls in Richtung der Z-Achse erstreckt, senkrecht zur oberen Längsseite verläuft und deshalb nach vorn und unten geneigt ist sowie eine Z-Führung für einen Reitstock bildet. Die EP-0 239 564-A2 läßt aber keinerlei Grund für die Maßnahme erkennen, die obere Längsseite des Maschinenbetts senkrecht zur Zerspanungsebene verlaufen zu lassen.

Die DE-39 37 330-A1 offenbart schließlich eine Drehmaschine mit vier Werkstückspindeln mit vertikaler Werkstückspindelachse sowie einem gleichfalls vertikal verlaufenden Maschinenständer, der einen ungefähr quadratischen Querschnitt besitzt und an dessen vier Längsseiten jeweils ein Bettschlitten eines einen Werkzeugträger tragenden Kreuzschlittensystems in Richtung der Z-Achse verschiebbar geführt ist. Jeweils zwei dieser Bettschlitten sind also auf voneinander abgewandten Längsseiten des ein Schlittenbett bildenden Maschinenständers angeordnet.

Damit sich ein möglichst steifes Schlittenbett ergibt, wird empfohlen, eine erfindungsgemäße Drehmaschine so auszubilden, daß - senkrecht auf die Zerspanungsebene gesehen - die beiden Z-Führungen wenigstens eines der beiden Bettschlitten in Richtung der X-Achse derart im Abstand voneinander angeordnet sind, daß die von der Zerspanungsebene den größeren Abstand aufweisenden Z-Führungen der beiden Bettschlitten in Richtung der X-Achse einen größeren Abstand voneinander haben als die der Zerspanungsebene näher liegenden Z-Führungen dieser beiden Bettschlitten. Bei einer solchen Drehmaschine kann das Schlittenbett zumindest an seiner von der Zerspanungsebene abgewandten Seite mit einem großen Querschnitt versehen werden, ohne daß dadurch die der Zerspanungsebene zugewandten Seiten der beiden Bettschlitten einen großen Abstand voneinander haben müssen. Außerdem führt ein solches Schlittenbett zu bezüglich der Aufnahme der Zerspanungskräfte günstigeren Verhältnissen an den Z-Führungen für den unteren Bettschlitten als bei Drehmaschinen, bei denen die Z-Führungen für einen unteren Bettschlitten in einer Ebene übereinander liegen, welche vertikal verläuft oder gegenüber einer vertikalen Ebene etwas geneigt ist.

Wie bereits erwähnt, sind bei bekannten Drehmaschinen die Befestigungsflächen des Maschinenbetts für den Spindelstock gleichfalls parallel zur Zerspanungsebene orientiert, was zu den vorstehend beschriebenen nachteiligen Folgen einer unbeabsichtigten Kollision zwischen dem Spannfutter der Werkstückspindel und einem Werkzeugträger führt. Deshalb wird in Anwendung des Grundgedankens der vorliegenden Erfindung auf den Spindelstock empfohlen, letzteren am Schlittenbett zu befestigen, u.z. derart, daß das Schlittenbett - in Richtung der X-Achse gesehen - zu beiden Seiten der Spindelachse ebene und zueinander parallele sowie quer zur Zerspanungsebene verlaufende Befestigungsflächen aufweist, auf denen der Spindelstock aufliegt und befestigt wird. Da dann der Spindelstock auf diesen Befestigungsflächen in Richtung der Kollisionskräfte rutschen kann, werden die am Spindelstock und am Schlittenbett auftretenden Kräfte begrenzt und bleibende Schäden vermieden. Außerdem ist das nach einer Kollision erforderliche neue Justieren des Spindelstocks unkritisch, da sich die Parallelität zwischen den Spindelstockauflagen und der Bewegungsrichtung der Bettschlitten in Richtung der Z-Achse nicht verändert hat. Auch eröffnen quer zur Zerspanungsebene verlaufende Befestigungsflächen für den Spindelstock die Möglichkeit, diesen sehr nieder (in Richtung der X-Achse) zu gestalten. Ein niederer Spindelstock erweist sich aber als außerordentlich vorteilhaft beim Einsatz von Werkstück-Handhabungsgeräten, wie einem Ladeportal, da diese dann die Werkstücke sehr dicht über der Spindelachse zu- und abführen können.

Bei einer Drehmaschine mit einem derart befestigten Spindelstock läßt sich schließlich ohne weiteres noch ein zusätzlicher Vorteil erreichen, wenn der Spindelstock zu beiden Seiten der Spindelachse nach außen vorspringende Befestigungselemente aufweist, welche auf den Befestigungsflächen des Schlittenbetts aufliegen, wobei diese Befestigungselemente und die Spindelachse in einer gemeinsamen Ebene liegen. Dann wandert nämlich bei einer Erwärmung des Spindelstocks während des Betriebs der Drehmaschine die Spindelachse nicht aus ihrer Sollposition heraus.

Die zuletzt beschriebene vorteilhafte Ausführungsform der erfindungsgemäßen Drehmaschine eröffnet noch eine weitere Möglichkeit: Bildet man die Konstruktion nämlich so aus, daß der Spindelstock nur mit seinen Befestigungselementen gegen das Schlittenbett anliegt und daß in dem zwischen seinen Befestigungselementen liegenden Bereich ein Luftspalt zwischen Schlittenbett und Spindelstock verbleibt, ist ein Luftzutritt zu nahezu der gesamten Mantelfläche des Spindelstocks möglich, so daß letzterer gut gekühlt wird, vor allem dann, wenn dieser Luftspalt an seinen beiden Längsenden offen ist.

Schließlich sei noch erwähnt, daß bei einem derart befestigten Spindelstock wegen der quer zur Zerspanungsebene orientierten Schnittkräfte letztere vom Schlittenbett in idealer Weise aufgenommen werden können, da das Widerstandsmoment des Schlittenbett-Querschnitts in dieser Richtung sehr hoch ist.

Bei besonders vorteilhaften Ausführungsformen der erfindungsgemäßen Drehmaschine sind die Befestigungsflächen für die Z-Führungen der Bettschlitten und/oder für den Spindelstock senkrecht zur Zerspanungsebene orientiert, obwohl grundsätzlich die mit den Z-Führungen versehenen Bereiche der beiden Schlittenbett-Längsseiten, d. h. insbesondere die genannten Befestigungsflächen, nur quer und nicht exakt senkrecht zur Zerspanungsebene verlaufen müssen und deshalb mit einer zur Zerspanungsebene senkrechten und parallel zur Z-Achse verlaufenden Ebene auch kleine Winkel von beispielsweise 5° oder 10° bilden können, ohne daß die vorstehend beschriebenen Vorteile erheblich abgeschwächt werden würden.

Aus den vorstehenden Erläuterungen ergibt sich, daß bei besonders vorteilhaften Ausführungsformen der erfindungsgemäßen Drehmaschine die Kollisionskräfte den Spindelstock und/oder den betreffenden Bettschlitten in Richtung dieser Kollisionskräfte verschieben können, was bei den bekannten Drehmaschinen nicht möglich war, so daß dort hohe und zu nicht oder kaum mehr behebbaren Schäden führende Kräfte auftraten. Im übrigen gelten die vorstehend angestellten Kollisionsbetrachtungen nicht nur für eine unbeabsichtigte Kollision des schnell rotierenden Spannfutters der Werkstückspindel mit einem Schlitten, einem Werkzeugträger oder einem Werkzeug, sondern auch für eine unbeabsichtigte Kollision eines mit Werkzeugen bestückten Werkzeugrevolvers mit dem Spannfutter, einem von diesem gehaltenen Werkstück oder dem Spindelstock, was dann verständlich wird, wenn man sich die hohen Schaltgeschwindigkeiten der Werkzeugrevolver moderner Drehmaschinen vor Augen hält - beim Schalten eines Werkzeugrevolvers, d.h. beim Drehen des Werkzeugrevolvers um seine Schaltachse, werden Rotationsgeschwindigkeiten erreicht, welche einer Drehzahl des Werkzeugrevolvers um seine Schaltachse von beispielsweise 180 Umdrehungen pro Minute entsprechen.

Bei einer erfindungsgemäßen Drehmaschine lassen sich die eingangs in Verbindung mit der Energiezufuhr zu einem Werkzeugträger-Schlittensystem erläuterten Probleme elegant lösen, indem an der von der Spindelachse abgewandten Seite des unteren Bettschlittens ein von der Zerspanungsebene wegweisender Arm angeordnet wird, welcher wenigstens eine Energiezuführungsleitung z.B. für den Antrieb des weiteren Schlittens und/oder des zugehörigen Werkzeugträgers trägt. Dieser Arm kann aber beispielsweise auch dazu dienen, eine Druckmittelleitung zu halten, mit der eine Werkstück-Spannvorrichtung betätigt wird, welche an einer z.B. von einem Werkzeugrevolver gehaltenen Werkstückspindel vorgesehen ist. Eine besonders steife Konstruktion ergibt sich dann, wenn für diesen Arm zwischen Maschinenbasis und Schlittenbett eine längliche, sich in Richtung der Z-Achse erstreckende Öffnung vorgesehen wird, durch welche dieser Arm hindurchgreift.

Weitere Merkmale, Vorteile und Einzelheiten der Erfindung ergeben sich aus der beigefügten zeichnerischen Darstellung zweier besonders vorteilhafter Ausführungsformen der erfindungsgemäßen Drehmaschine und/oder aus der nachfolgenden Beschreibung dieser beiden Ausführungsformen; in der Zeichnung zeigen:
- Fig. 1:: einen Querschnitt durch die erste Ausführungsform der erfindungsgemäßen Drehmaschine, bei der es sich um eine Maschine mit vertikaler Zerspanungsebene handelt;
- Fig. 2:: eine Stirnansicht des Schlittenbetts, gesehen in Richtung der Z-Achse;
- Fig. 3:: eine Draufsicht auf das Schlittenbett;
- Fig. 4:: eine Frontansicht der Drehmaschine nach Fig. 1, gesehen in Richtung des Pfeils "A" aus Fig. 1;
- Fig. 5:: eine Rückseitenansicht dieser Maschine, gesehen in Richtung des Pfeils "B" aus Fig. 1;
- Fig. 6:: eine der Fig. 1 entsprechende Schnittdarstellung der zweiten Ausführungsform, bei der es sich um eine sogenannte Schrägbettmaschine handelt, und
- Fig. 7:: einen Schnitt senkrecht zur Z-Achse durch eine der Z-Führungen, und zwar durch die gemäß Fig. 6 links oben liegende Z-Führung für den unteren Bettschlitten, wobei in Fig. 7 auch die an diese Z-Führung angrenzenden Bereiche des Schlittenbetts und des unteren Bettschlittens angedeutet wurden.

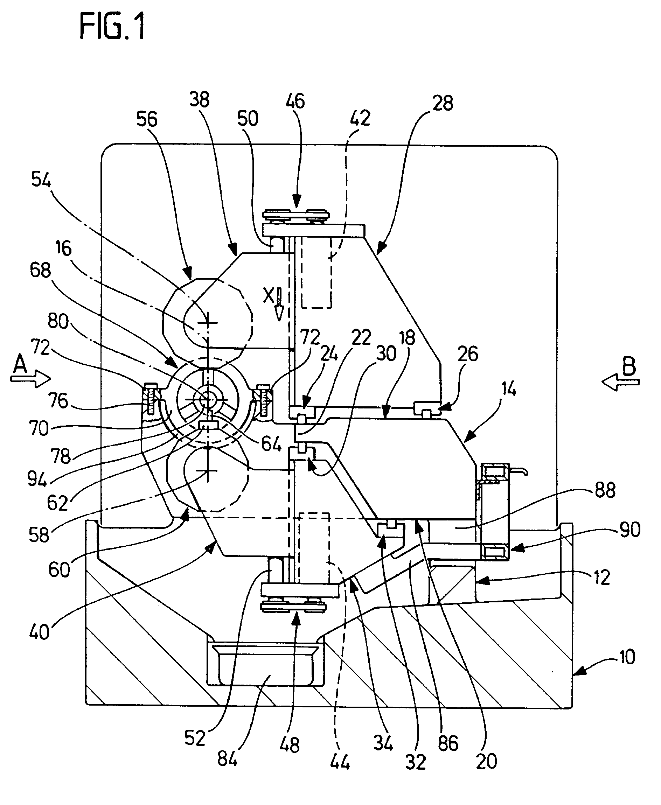

Zunächst soll nun die erste Ausführungsform soweit wie möglich anhand der Fig. 1 beschrieben werden.

Diese erfindungsgemäße Drehmaschine besitzt eine Maschinenbasis 10, welche insbesondere über eine Brücke 12 ein Schlittenbett 14 trägt; die Maschinenbasis 10, die Brücke 12 und das Schlittenbett 14 erstrecken sich in Richtung der Z-Achse, welche senkrecht zur Zeichnungsebene der Fig. 1 verläuft. Die gemäß Fig. 1 linke Seite der dargestellten Drehmaschine bildet deren Frontseite, vor der sich eine Bedienungsperson üblicherweise aufhält, so daß der gemäß Fig. 1 links vom Schlittenbett 14 liegende Bereich der Drehmaschine deren Arbeitsraum bildet. Vorteilhafterweise besitzt das Schlittenbett 14 einen Querschnitt, welcher ungefähr der Form eines Parallelogramms mit quer zu einer später noch zu erläuternden Zerspanungsebene 16 verlaufenden oberen und unteren Längsseiten 18 bzw. 20, einem abgeschnittenen unteren und hinteren Eckbereich und einer der Zerspanungsebene 16 zugewandten, an die obere, vordere Ecke dieses Parallelogramms angeformten Tragrippe 22 entspricht. Aus Fig. 1 erkennt man, daß infolge der dargestellten Gestaltung und Anordnung der Tragrippe 22 die obere Längsseite 18 des Schlittenbetts 14 abgestuft ist (im Schnitt senkrecht zur Z-Achse), und für das Folgende soll unter der unteren Längsseite des Schlittenbetts 14 dessen gesamte Unterseite verstanden werden, welche von der Unterseite der Tragrippe 22, dem schräg nach unten und hinten verlaufenden Flächenbereich und dem quer zur Zerspanungsebene 16 verlaufenden unteren Flächenbereich des Schlittenbetts 14 gebildet wird; bei der dargestellten, besonders vorteilhaften Ausführungsform des Schlittenbetts 14 ist also dessen untere Längsseite 20 abgestuft (im Schnitt senkrecht zur Z-Achse).

Auf der oberen Längsseite 18 des Schlittenbetts 14 sind zwei (sich in Richtung der Z-Achse erstreckende) Z-Führungen angeordnet, bei denen es sich um an sich bekannte Längsführungen handelt; solche Längsführungen bestehen ganz grob aus einem geführten Teil und einem führenden Teil, von denen dann das eine am Schlittenbett 14 und das andere an einem längs des Schlittenbetts verschiebbar gehaltenen Bettschlitten befestigt ist. Die Fig. 1 zeigt eine vordere obere Z-Führung 24 und eine hintere obere Z-Führung 26, welche gemeinsam einen oberen Bettschlitten 28 tragen. In gleicher Weise sind an der unteren Längsseite 20 des Schlittenbetts 14 eine vordere untere Z-Führung 30 und eine hintere untere Z-Führung 32 angeordnet, welche gemeinsam einen unteren Bettschlitten 34 tragen, welcher erfindungsgemäß an der Unterseite des Schlittenbetts 14 hängt, d. h. vermittels der unteren Z-Führungen 30, 32 am Schlittenbett 14 aufgehängt ist. Die beiden Bettschlitten 28 und 34 sollen erfindungsgemäß nicht dargestellte Aussparungen und/oder Hohlräume aufweisen, in denen Elemente oder Baugruppen der Drehmaschine angeordnet werden können. Hierauf wird im folgenden noch näher einzugehen sein.

An den Frontseiten der beiden Bettschlitten 28 und 34 ist jeweils ein Schlitten in Richtung der sogenannten X-Achse der Drehmaschine verschiebbar gehalten; die Richtung der X-Achse ist in Fig. 1 durch einen Pfeil angedeutet, sie ist parallel zur Zerspanungsebene 16 und senkrecht zur Z-Achse orientiert. Bei diesen beiden Schlitten handelt es sich um einen am oberen Bettschlitten 28 geführten oberen X-Schlitten 38 und einen am unteren Bettschlitten 34 geführten unteren X-Schlitten 40. In Aussparungen oder Hohlräumen der beiden Bettschlitten 28 und 34 ist jeweils ein im folgenden als X-Motor bezeichneter Antriebsmotor 42 bzw. 44 angeordnet, welcher über ein als Riemengetriebe dargestelltes Getriebe 46 bzw. 48 jeweils eine Kugelrollspindel 50 bzw. 52 antreibt, welche sich in Richtung der X-Achse erstreckt und der Verschiebung des X-Schlittens 38 bzw. des X-Schlittens 40 dient. Bei den der Führung und dem Antrieb der X-Schlitten 38 und 40 dienenden Führungen und Kugelrollspindeln handelt es sich um bekannte Maschinenbauelemente, so daß auf diese nicht näher eingegangen zu werden braucht.

An den beiden X-Schlitten 38 und 40 ist jeweils ein Werkzeugträger angebracht, bei denen es sich vorteilhafterweise um Werkzeugrevolver handelt, von denen mindestens einer eine zur Z-Achse parallele Schaltachse besitzt; die Fig. 1 zeigt einen am oberen X-Schlitten 38 angeordneten und um eine Schaltachse 54 drehbar gelagerten oberen Werkzeugrevolver 56 sowie einen am unteren X-Schlitten 40 angeordneten und um eine Schaltachse 58 drehbar gelagerten unteren Werkzeugrevolver 60, wobei es besonders vorteilhaft ist, wenn die beiden Schaltachsen 54 und 58 in der Zerspanungsebene 16 liegen und beide parallel zur Z-Achse orientiert sind. Am unteren Werkzeugrevolver 60 ist ein von diesem getragener Werkzeughalter 62 mit einem Drehwerkzeug 64 angedeutet, dessen oben liegende Schneide erfindungsgemäß in der Zerspanungsebene 16 liegt und durch Bewegen des X-Schlittens 40 in dieser Zerspanungsebene in Richtung der X-Achse verschoben werden kann.

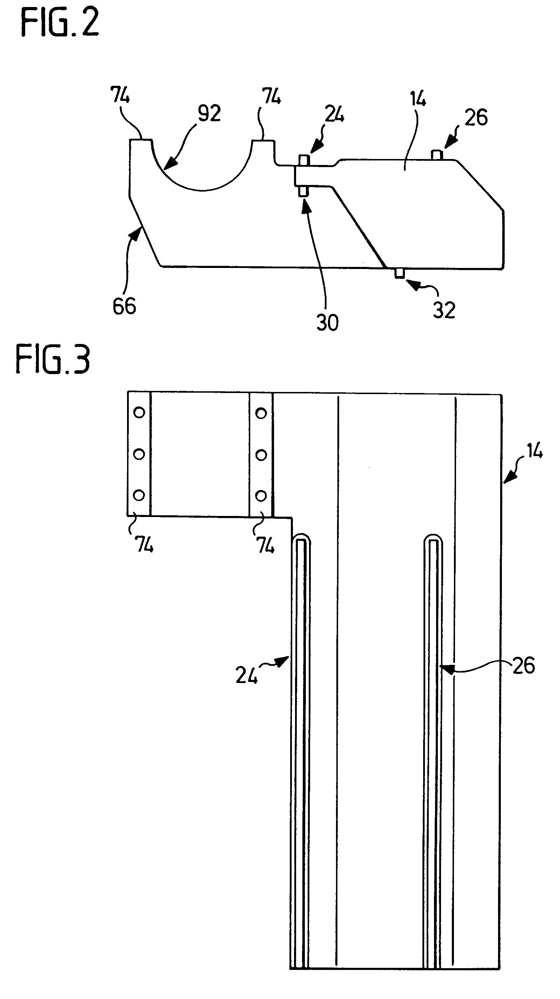

Wie am deutlichsten die Figuren 2 und 3 erkennen lassen, ist am Schlittenbett 14 ein Spindelstockträger 66 angebracht und mit dem Schlittenbett 14 insbesondere einstückig; dieser Spindelstockträger 66 hat vorteilhafterweise die Gestalt eines Auslegers oder Arms, welcher einen Spindelstock 68 (siehe Fig. 1) trägt. Der Spindelstock 68 besitzt ein insbesondere ungefähr kreiszylindrisches Spindelstockgehäuse 70 mit zwei seitlichen Befestigungsrippen 72, für die der Spindelstockträger 66 an seiner Oberseite zwei Trag- und Befestigungsflächen 74 aufweist. Diese sind erfindungsgemäß eben, zueinander parallel (sie können auch in einer gemeinsamen Ebene liegen) und quer, insbesondere senkrecht, zur Zerspanungsebene 16 orientiert und erstrecken sich in Richtung der Z-Achse. Der Befestigung des Spindelstocks 68 auf dem Spindelstockträger 66 dienen Befestigungsschrauben 76.

Im Spindelstockgehäuse 70 ist eine Werkstückspindel 78 drehbar, jedoch axial unverschieblich gelagert; es handelt sich dabei vorteilhafterweise um eine sogenannte Motorspindel, bei der die eigentliche Werkstückspindel 78 mit einem nicht dargestellten Motor zu einer Baueinheit zusammengefaßt ist, wobei dieser Motor die eigentliche Werkstückspindel 78 um eine Spindelachse 80 dreht, die erfindungsgemäß in der Zerspanungsebene 16 liegt und parallel zur Z-Achse orientiert ist bzw. die Richtung der Z-Achse definiert. Die Werkstückspindel 78 soll an ihrem dem Betrachter der Fig. 1 zugewandten Ende eine nicht dargestellte Werkstück-Spannvorrichtung tragen, so daß ein von der Werkstückspindel gehaltenes Werkstück beispielsweise mit Hilfe des Werkzeugs 64 einer Drehbearbeitung unterzogen werden kann. Die Zerspanungsebene 16 ist also diejenige Ebene, in der sich die Schneide oder Spitze des Werkzeugs 64 in bezüglich der Spindelachse 80 radialer Richtung in Richtung auf die Spindelachse 80 vor-schieben läßt, um z. B. den Durchmesser eines Werkstücks zu verkleinern. Aus der Fig. 1 erkennt man auch ohne weiteres, daß die beim Bearbeiten eines Werkstücks mit Hilfe z. B. des Werkzeugs 64 auftretenden Zerspanungskräfte im wesentlichen senkrecht zur Zerspanungsebene 16 orientiert sind. Bei der Bearbeitung entstehende Späne fallen im Arbeitsraum nach unten auf obere Schrägflächen der Maschinenbasis und von dort in eine Spänewanne 84, an deren Stelle aber z. B. auch ein Späneförderer treten kann.

In Fig. 1 ist dargestellt, wie z. B. dem unteren X-Motor 44, einem nicht dargestellten Motor zum Drehen des unteren Werkzeugrevolvers 60 um dessen Schaltachse 58, einer Spannvorrichtung zum Spannen eines vom unteren Werkzeugrevolver 60 gehaltenen Werkzeugs und/oder einem gleichfalls nicht dargestellten Antriebsmotor für eine vom Werkzeugrevolver 60 gehaltene Werkzeug- oder Werkstückspindel Energie und/oder Steuersignale zugeführt werden können: Zu diesem Zweck ist erfindungsgemäß am unteren Bettschlitten 34 ein Energiezuführungsarm 86 befestigt, welcher ein Fenster 88 in Form einer länglichen, sich in Richtung der Z-Achse erstreckenden Öffnung in der Brücke 12 durchgreift und zu einer sogenannten Energieführungskette 90 führt, bei der es sich um ein flexibles, hohles Gebilde handelt, in deren Innerem nicht dargestellte Energie- und Signalleitungen untergebracht sind. Das eine Ende einer solchen Energieführungskette 90 ist maschinenfest, das andere Ende ist fest mit dem Energiezuführungsarm 86 verbunden, so daß auf diese Weise die Energie- und Signalübermittlung zum unteren Bettschlitten 34 erfolgen kann.

Den Figuren 1 und 2 kann schließlich noch ein weiterer wesentlicher Vorteil der erfindungsgemäßen Drehmaschine entnommen werden: Der Spindelstockträger 66 besitzt oben zwischen seinen Befestigungsflächen 74 eine Ausnehmung 92 zur Aufnahme des Spindelstocks 68; da dessen Gehäuse 70 bei der dargestellten bevorzugten Ausführungsform eine kreiszylindrische Gestalt hat, ist die Ausnehmung 92 halbkreiszylindrisch gestaltet, jedoch mit einem größeren Radius als derjenige der äußeren Mantelfläche des Spindelstockgehäuses 70, so daß sich zwischen diesem und der Oberfläche der Ausnehmung 92 ein vorn und hinten offener Luftspalt 94 ergibt, welcher dazu führt, daß die Mantelfläche des Spindelstocks 68 nahezu überall von der Umgebungsluft gekühlt wird. Natürlich könnte die Außenkontur des Spindelstocks 68 z. B. auch einem Quadrat entsprechen, wobei man dann die Kontur der Ausnehmung 92 des Spindelstockträgers 66 entsprechend gestalten würde.

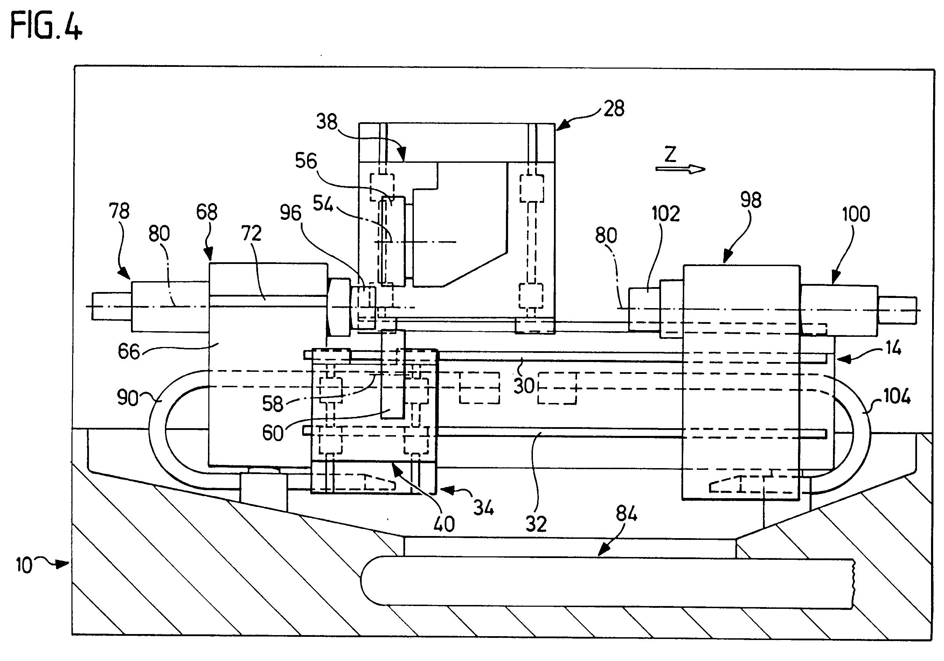

Der in Fig. 4 dargestellten Frontansicht der bevorzugten ersten Ausführungsform der erfindungsgemäßen Drehmaschine lassen sich noch weitere Komponenten dieser Maschine entnehmen: Zum einen ist in Fig. 4 ein Spannfutter 96 der Werkstückspindel 78 dargestellt, in dem ein zu bearbeitendes Werkstück gehalten werden kann, ferner zeigt die Fig. 4 einen weiteren Spindelstock 98 für eine zweite Werkstückspindel 100, welcher erfindungsgemäß auf den beiden Z-Führungen 30 und 32 für den unteren Bettschlitten 34 in Richtung der in Fig. 4 mittels eines Pfeils angedeuteten Z-Achse am Schlittenbett 14 verschiebbar geführt und gehalten ist. Die mit einem zweiten Spannfutter 102 versehene und üblicherweise als Gegenspindel bezeichnete zweite Werkstückspindel 100 hat eine Spindelachse, welche mit der Spindelachse 80 zusammenfällt, d. h. die beiden Spannfutter 96 und 102 sind einander gegenüberliegend und koaxial zueinander angeordnet. Schließlich zeigt die Fig. 4 eine zweite Energieführungskette 104 für den zweiten Spindelstock 98.

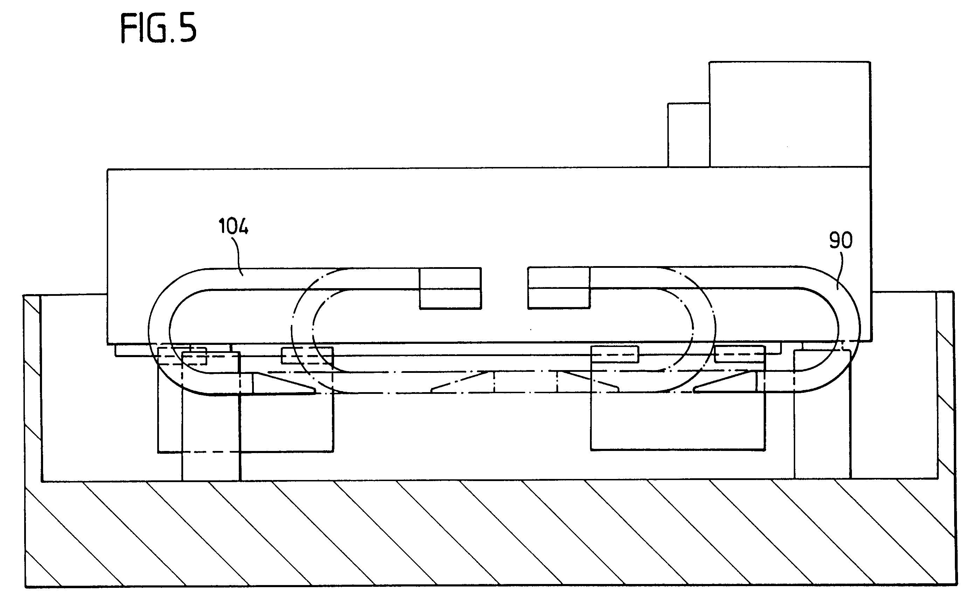

Die in Fig. 5 gezeigte Rückseitenansicht der ersten Ausführungsform der erfindungsgemäßen Drehmaschine zeigt nicht alle Teile dieser Drehmaschine, weil sie nur dazu dienen soll, die beiden Energieführungsketten 90 und 104 noch einmal deutlicher zu zeigen.

Den Figuren 4 und 5 läßt sich auch entnehmen, daß mit Werkzeugen beider Werkzeugrevolver 56 und 60 unabhängig voneinander sowohl von der Werkstückspindel 78, als auch von der Gegenspindel 100 gehaltene Werkstücke bearbeitet werden können; so kann z. B. mit dem einen Werkzeugrevolver an einem von der einen Werkstückspindel gehaltenen Werkstück gearbeitet werden, während mit einem Werkzeug des anderen Werkzeugrevolvers ein von der anderen Werkstückspindel gehaltenes Werkstück bearbeitet wird, es ist aber auch möglich, mit Werkzeugen beider Werkzeugrevolver gleichzeitig ein Werkstück zu bearbeiten, welches entweder von der Werkstückspindel 78, oder von der Gegenspindel 100 gehalten wird.

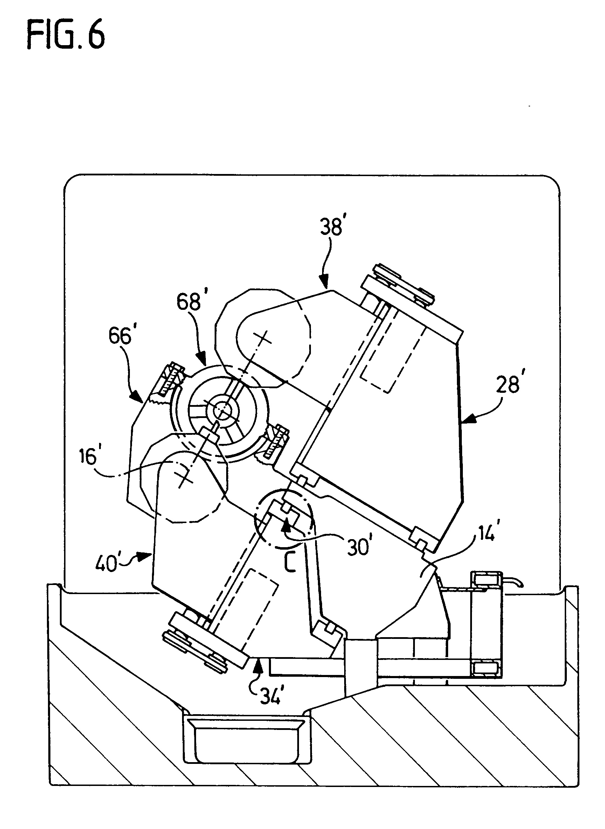

Die Fig. 6 zeigt in einem der Fig. 1 entsprechenden Schnitt die zweite bevorzugte Ausführungsform der erfindungsgemäßen Drehmaschine, welche sich, soweit dies für die vorliegende Erfindung relevant ist, von der ersten, in Fig. 1 dargestellten Ausführungsform nur dadurch unterscheidet, daß eine Zerspanungsebene 16' gegenüber der Vertikalen um einen Winkel von ca. 30° nach hinten geneigt ist, was zur Folge hat, daß auch das Schlittenbett 14', die Schlitten 28', 38', 34' und 40', der Spindelstockträger 66' und der Spindelstock 68' gegenüber der Horizontalen um denselben Winkel nach hinten bzw. unten geneigt angeordnet sind. Es erübrigt sich deshalb, die zweite Ausführungsform detaillierter zu beschreiben.

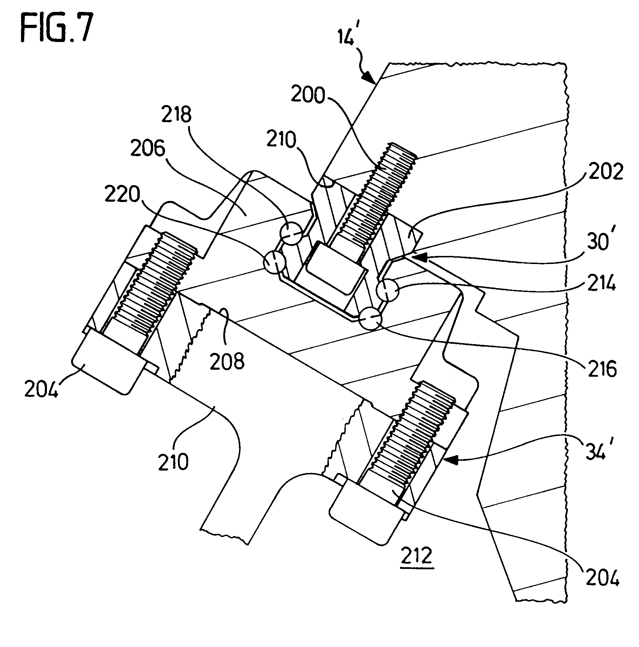

Die Fig. 7 zeigt nun den in Fig. 6 mit "C" markierten Ausschnitt in größerem Maßstab und im Detail, d. h. die vordere untere Z-Führung 30' der in Fig. 6 gezeigten Drehmaschine mit den an diese angrenzenden Bereichen des unteren Bettschlittens 34' und des Schlittenbetts 14'. Alle anderen Z-Führungen, auch die Z-Führungen 24, 26, 30 und 32 der in Fig. 1 dargestellten Drehmaschine können denselben Aufbau wie die in Fig. 7 dargestellte Z-Führung 30' haben.

Die Fig. 7 zeigt eine mittels Schrauben 200 am Schlittenbett 14' befestigte Führungsleiste 202, welche in einer mittels Schrauben 204 am unteren Bettschlitten 34' befestigten Führungsschiene 206 längsverschiebbar geführt ist, d. h. in Richtung der Z-Achse und damit senkrecht zur Zeichnungsebene der Fig. 7. Bei der in Fig. 7 dargestellten erfindungsgemäßen Ausbildung der Drehmaschine bildet die Oberseite des unteren Bettschlittens 34' eine Befestigungsfläche 208, welche eben, parallel zu einer entsprechenden Befestigungsfläche des unteren Bettschlittens 34' für dessen zweite Z-Führung und in Richtung der Z-Achse sowie quer und insbesondere senkrecht zur Zerspanungsebene 16' orientiert ist. Entsprechendes gilt für Befestigungsflächen des oberen Bettschlittens 28' für dessen beide Z-Führungen. Die Konstruktion könnte aber auch so ausgebildet sein, daß die Führungsschienen 206 für die beiden Bettschlitten 28' und 34' am Schlittenbett 14' befestigt sind und infolgedessen das Schlittenbett mit den Befestigungsflächen 208 entsprechenden Befestigungsflächen versehen ist. Gleiches gilt für eine Befestigungsfläche 210 für die Führungsleiste 202, wobei bei der in Fig. 7 dargestellten Ausführungsform die Befestigungsfläche 210 an der Unterseite des Schlittenbetts 14' vorgesehen ist, sowie für der Befestigungsfläche 210 entsprechende weitere Befestigungsflächen für die Führungsleisten 202 der anderen Z-Führungen.

Bei der in Fig. 7 dargestellten bevorzugten Ausführungsform weist der Bettschlitten an seinem der Zerspanungsebene und dem Schlittenbett zugewandten Längskantenbereich eine Rippe 210 auf, an der ein Teil der Befestigungsfläche 208 ausgebildet ist; außerdem ist in Fig. 7 eine am oder im Bettschlitten gebildete Aussparung 212 angedeutet, welche einen Aufnahmeraum für im Bettschlitten unterbringbare Maschinenelemente bilden kann und das Eindrehen und Anziehen der gemäß Fig. 7 rechten Schraube 204 ermöglicht.

Die in Fig. 7 dargestellte, an sich bekannte und auf dem Markt erhältliche Z-Führung 30' ist des weiteren wie folgt ausgebildet: An den Stirnenden der Führungsschiene 206 sind nicht dargestellte Verschlußplatten befestigt, welche Aussparungen haben, die zwar die Führungsleiste 202 in Richtung der Z-Achse hindurchtreten lassen, nicht jedoch die Kugeln 214, 216, 218 und 220 von vier Kugelsätzen, welche der Lagerung der Führungsleiste 202 in der Führungsschiene 206 dienen. Für die Kugeln dieser vier Kugelsätze sind an den Stirnenden der Führungsschiene 206 bekannte und gleichfalls nicht dargestellte Umlenkkanäle sowie längs der Führungsschiene 206 verlaufende und gleichfalls nicht dargestellte Rückführkanäle vorgesehen.

Die Figuren 1 bzw. 6 lassen nun in Verbindung mit Fig. 7 folgendes erkennen:
Wie vorstehend erwähnt wurde, sind die bei den beschriebenen Kollisionsfällen auftretenden Kräfte überwiegend quer zur Zerspanungsebene 16 bzw. 16' orientiert, und bei einer erfindungsgemäßen Drehmaschine können diese beträchtlichen Kräfte nicht zu nicht wieder relativ leicht behebbaren Schäden führen, da sowohl der Spindelstock 68 bzw. 68' in Richtung dieser Kräfte auf seinen Befestigungsflächen 74 verschoben werden kann (wenn die Befestigungsschrauben 76 brechen), als auch die Führungsschienen 206 in Richtung dieser Kräfte auf ihren Befestigungsflächen 208 verschiebbar sind (wenn die Schrauben 204 brechen). Bei einer solchen Kollision verbleibt infolgedessen die Spindelachse 80 in derjenigen, quer zur Zerspanungsebene verlaufenden Ebene, in der sie auch vor der Kollision lag, so daß es nur erforderlich ist, die Spindelachse 80 in dieser Ebene neu zu justieren, so daß sie wieder parallel zur Z-Achse verläuft; in entsprechender Weise verbleiben bei einer solchen Kollision die Auflageflächen der Führungsschienen 206 in derjenigen bzw. denjenigen, quer zur Zerspanungsebene verlaufenden Ebene bzw. Ebenen, in der bzw. denen diese Auflageflächen vor der Kollision lagen, so daß es nur erforderlich ist, die Führungsschienen 206 nach einer solchen Kollision in dieser Ebene bzw. in diesen Ebenen neu zu justieren, um sie in Richtung der Z-Achse auszurichten.

Aus den vorstehenden Ausführungen ergibt sich, daß unter dem Begriff "quer" im Sinne der Ansprüche zu verstehen ist, daß die mit den Z-Führungen versehenen Bereiche der beiden Schlittenbett-Längsseiten Flächen definieren, die mit der Zerspanungsebene einen spitzen Winkel oder einen rechten Winkel bilden; bei bevorzugten Ausführungsformen beträgt dieser Winkel ca. 75° bis 90°, und besonders vorteilhaft ist ein Winkel von 90°.

## Patentansprüche

1. Drehmaschine mit einer Maschinenbasis, wenigstens einem Spindelstock, in dem eine Werkstückspindel zum Halten eines zu bearbeitenden Werkstücks um eine die Richtung einer Z-Achse der Drehmaschine definierende Spindelachse drehbar gelagert ist, einem mit der Maschinenbasis fest verbundenen Schlittenbett, welches sich in Richtung der Z-Achse erstreckende Längsseiten besitzt, und mit wenigstens zwei an Schlittenbettlängsseiten in Richtung der Z-Achse verschiebbar gehaltenen Werkzeugträger-Schlittensystemen, deren jedes einen am Schlittenbett in Richtung der Z-Achse geführten Bettschlitten sowie mindestens einen weiteren, in Richtung einer derart senkrecht zur Z-Achse verlaufenden X-Achse der Drehmaschine verschiebbaren Schlitten aufweist, daß ein Werkzeug eines von dem betreffenden Schlittensystem gehaltenen Werkzeugträgers parallel zur X-Achse in bezüglich der Spindelachse radialer Richtung verschiebbar ist und die Spindelachse mit der Richtung der X-Achse eine Zerspanungsebene definiert, welche mit einer durch die Spindelachse verlaufenden horizontalen Ebene einen Winkel von mindestens ca. 45° und höchstens ca. 90° bildet, wobei an zwei Längsseiten des Schlittenbetts jeweils zwei sich in Richtung der Z-Achse erstreckende Z-Führungen für jeweils einen dieser Bettschlitten vorgesehen sind,
**dadurch gekennzeichnet,** daß das Schlittenbett (14) derart ausgebildet ist, daß - in Richtung der Z-Achse (80) gesehen - die beiden Bettschlitten (28, 34) auf voneinander abgewandten Längsseiten (18, 20) des Schlittenbetts (14) angeordnet sind, wobei - von oben in Richtung der X-Achse gesehen - der eine Bettschlitten (28) über dem Schlittenbett (14) und der andere Bettschlitten (34) unter dem Schlittenbett angeordnet ist, und daß die mit den beiden Z-Führungen (24, 26) für den einen Bettschlitten (28) versehenen Bereiche der einen Längsseite (18) des Schlittenbetts (14) sowohl parallel zueinander, als auch parallel zu den mit den beiden Z-Führungen (30, 32) für den anderen Bettschlitten (34) versehenen Bereichen der anderen Längsseite (20) des Schlittenbetts (14) sowie quer zur Zerspanungsebene (16) verlaufen.

2. Drehmaschine nach Anspruch 1, dadurch gekennzeichnet, daß das Schlittenbett (14) an seinen die beiden Bettschlitten (28, 34) tragenden Längsseiten (18, 20) ebene, sich in Richtung der Z-Achse (80) erstreckende Befestigungsflächen (210) aufweist, auf denen die Z-Führungen (24, 26, 30, 32; 30') befestigt sind, wobei alle diese Befestigungsflächen (210) quer zur Zerspanungsebene (16) und parallel zueinander verlaufen.

3. Drehmaschine nach Anspruch 1 oder 2, dadurch gekennzeichnet, daß - senkrecht auf die Zerspanungsebene (16) gesehen - die beiden Z-Führungen (24, 26, 30, 32) wenigstens eines der beiden Bettschlitten (28, 34) in Richtung der X-Achse derart im Abstand voneinander angeordnet sind, daß die von der Zerspanungsebene (16) den größeren Abstand aufweisenden Z-Führungen (26, 32) der beiden Bettschlitten (28, 34) in Richtung der X-Achse einen größeren Abstand voneinander haben als die der Zerspanungsebene (16) näherliegenden Z-Führungen (24, 30) dieser beiden Bettschlitten.

4. Drehmaschine nach einem oder mehreren der vorstehenden Ansprüche, dadurch gekennzeichnet, daß der Spindelstock (68) am Schlittenbett (14) befestigt ist, wobei letzteres - in Richtung der X-Achse gesehen - zu beiden Seiten der Spindelachse (80) ebene und zueinander parallele sowie quer zur Zerspanungsebene (16) verlaufende Befestigungsflächen (74) aufweist, auf denen der Spindelstock (68) aufliegt.

5. Drehmaschine nach Anspruch 4, dadurch gekennzeichnet, daß der Spindelstock (68) zu beiden Seiten der Spindelachse (80) mit nach außen vorspringenden Befestigungselementen (72) versehen ist, welche auf den Befestigungsflächen (74) des Schlittenbetts (14) aufliegen, und daß diese Befestigungselemente (72) und die Spindelachse (80) in einer gemeinsamen Ebene liegen.

6. Drehmaschine nach Anspruch 4 oder 5, dadurch gekennzeichnet, daß der Spindelstock (68) nur mit seinen Befestigungselementen (72) am Schlittenbett (14) anliegt und daß in dem zwischen den Befestigungselementen (72) liegenden Bereich ein Luftspalt (94) zwischen Schlittenbett (14) und Spindelstock (68) vorgesehen ist.

7. Drehmaschine nach Anspruch 6, dadurch gekennzeichnet, daß der Luftspalt (94) an seinen beiden Längsenden offen ist.

8. Drehmaschine nach einem oder mehreren der Ansprüche 2 bis 7, dadurch gekennzeichnet, daß die Befestigungsflächen senkrecht zur Zerspanungsebene (16) verlaufen.

9. Drehmaschine nach einem oder mehreren der Ansprüche 1 bis 8, dadurch gekennzeichnet, daß an der von der Spindelachse (80) abgewandten Seite des unteren Bettschlittens (34) ein von der Zerspanungsebene (16) wegweisender Arm (86) angeordnet ist, welcher wenigstens eine Energiezuführungsleitung trägt.

10. Drehmaschine nach Anspruch 9, dadurch gekennzeichnet, daß zwischen Maschinenbasis (10) und Schlittenbett (14) eine längliche, sich in Richtung der Z-Achse (80) erstreckende Öffnung (88) vorgesehen ist, durch welche der Arm (86) hindurchgreift.

11. Drehmaschine nach einem oder mehreren der vorstehenden Ansprüche, dadurch gekennzeichnet, daß mindestens einer der beiden Bettschlitten (28, 34) ein Gehäuse zur Aufnahme wenigstens eines Maschinenteils (42, 44) bildet.

12. Drehmaschine nach Anspruch 11, dadurch gekennzeichnet, daß beide Bettschlitten (28, 34) Gehäuse zur Aufnahme von Maschinenteilen (42, 44) bilden.

13. Drehmaschine nach Anspruch 11 oder 12, dadurch gekennzeichnet, daß das Gehäuse einen Antriebsmotor (42, 44) zum Verschieben eines vom Bettschlitten (28, 34) getragenen weiteren Schlittens (38, 40) aufnimmt.

## Claims

1. Lathe comprising a machine base, at least one headstock, a workpiece spindle for holding a workpiece to be machined being mounted therein for rotation about a spindle axis defining the direction of a Z-axis of the lathe, a slide bed rigidly connected to the machine base and having longitudinal sides extending in the direction of the Z-axis, and at least two tool carrier slide systems held on longitudinal sides of the slide bed for displacement in the direction of the Z-axis, each of said tool carrier slide systems having a bed-side carriage guided on the slide bed in the direction of the Z-axis as well as at least one further slide displaceable in the direction of an X-axis of the lathe extending at right angles to the Z-axis such that a tool of a tool carrier held by the relevant slide system is displaceable parallel to the X-axis in a radial direction relative to the spindle axis and the spindle axis defines with the direction of the X-axis a machining plane which forms with a horizontal plane extending through the spindle axis an angle of at least approximately 45° and at the most approximately 90°, two Z-guides extending in the direction of the Z-axis being provided on each of two longitudinal sides of the slide bed for each of the respective bed-side carriages, **characterized** in that the slide bed (14) is designed such that - when seen in the direction of the Z-axis (80) - the two bed-side carriages (28, 34) are arranged on longitudinal sides (18, 20) of the slide bed (14) facing away from one another, and - when seen from above in the direction of the X-axis - the one bed-side carriage (28) is arranged above the slide bed (14) and the other bed-side carriage (34) beneath the slide bed, and that the regions of the one longitudinal side (18) of the slide bed (14) provided with the two Z-guides (24, 26) for the one bed-side carriage (28) extend both parallel to one another and parallel to the regions of the other longitudinal side (20) of the slide bed (14) provided with the two Z-guides (30, 32) for the other bed-side carriage (34) as well as transversely to the machining plane (16).

2. Lathe as defined in claim 1, characterized in that the slide bed (14) has on its longitudinal sides (18, 20) bearing the two bed-side carriages (28, 34) plane attachment surfaces (210) extending in the direction of the Z-axis (80), the Z-guides (24, 26, 30, 32; 30') being attached to said surfaces, and all these attachment surfaces (210) extending transversely to the machining plane (16) and parallel to one another.

3. Lathe as defined in claim 1 or 2, characterized in that - when viewed at right angles onto the machining plane (16) - the two Z-guides (24, 26, 30, 32) of at least one of the two bed-side carriages (28, 34) are arranged in the direction of the X-axis in such a spaced relation to one another that the Z-guides (26, 32) of the two bed-side carriages (28, 34) having the greater distance from the machining plane (16) are spaced at a greater distance from one another in the direction of the X-axis than the Z-guides (24, 30) of these two bed-side carriages located closer to the machining plane (16).

4. Lathe as defined in any one or several of the preceding claims, characterized in that the headstock (68) is attached to the slide bed (14), and the latter - when seen in the direction of the X-axis - has on both sides of the spindle axis (80) plane attachment surfaces (74) extending parallel to one another as well as transversely to the machining plane (16), and the headstock (68) rests on these surfaces.

5. Lathe as defined in claim 4, characterized in that the headstock (68) is provided on both sides of the spindle axis (80) with outwardly protruding attachment elements (72) resting on the attachment surfaces (74) of the slide bed (14), and that these attachment elements (72) and the spindle axis (80) are located in a common plane.

6. Lathe as defined in claim 4 or 5, characterized in that the headstock (68) rests on the slide bed (14) only with its attachment elements (72), and that in the region located between the attachment elements (72) an air gap (94) is provided between slide bed (14) and headstock (68).

7. Lathe as defined in claim 6, characterized in that the air gap (94) is open at its two longitudinal ends.

8. Lathe as defined in any one or several of claims 2 to 7, characterized in that the attachment surfaces extend at right angles to the machining plane (16).

9. Lathe as defined in any one or several of claims 1 to 8, characterized in that an arm (86) pointing away from the machining plane (16) and bearing at least one energy supply line is arranged on the side of the lower bed-side carriage (34) facing away from the spindle axis (80).

10. Lathe as defined in claim 9, characterized in that an elongated opening (88) extending in the direction of the Z-axis (80) and penetrated by the arm (86) is provided between machine base (10) and slide bed (14).

11. Lathe as defined in any one or several of the preceding claims, characterized in that at least one of the two bed-side carriages (28, 34) forms a housing for accommodating at least one machine part (42, 44).

12. Lathe as defined in claim 11, characterized in that both bed-side carriages (28, 34) form housings for accommodating machine parts (42, 44).

13. Lathe as defined in claim 11 or 12, characterized in that the housing accommodates a drive motor (42, 44) for displacing a further slide (38, 40) borne by the bed-side carriage (28, 34).

## Revendications

1. Tour comportant une base, au moins une poupée porte-broche dans laquelle une broche porte-pièce pour retenir une pièce à usiner est montée en rotation autour d'un axe de broche définissant la direction de l'axe Z du tour, comportant un banc de chariot qui est solidaire de la base et qui possède des côtés longitudinaux s'étendant en direction de l'axe Z, et comportant au moins deux systèmes de chariots porte-outils tenus en déplacement en direction de l'axe Z sur des côtés longitudinaux du banc de chariot, chacun desdits systèmes comprenant un chariot guidé en direction de l'axe Z sur le banc de chariot ainsi qu'au moins un autre chariot mobile en direction de l'axe X du tour qui s'étend perpendiculairement à l'axe Z, de telle sorte qu'un outil d'un porte-outil retenu par le système de chariots correspondant soit mobile parallèlement à l'axe X en direction radiale par rapport à l'axe de broche, et que l'axe de broche définit avec la direction de l'axe X un plan d'enlèvement de copeaux qui forme conjointement avec un plan horizontal passant par l'axe de broche un angle d'environ 45° au minium et d'environ 90° au maximum, sur deux côtés longitudinaux du banc de chariot étant prévus deux guidages Z respectifs s'étendant en direction de l'axe Z pour un de ces chariots respectifs, caractérisé en ce que le banc de chariot (14) est ainsi réalisé que, vu en direction de l'axe Z (80), les deux chariots (28, 34) sont agencés sur des côtés longitudinaux (18, 20) détournés l'un de l'autre du banc de chariot (14), l'un des chariots (28), vu depuis le haut en direction de l'axe X, étant agencé au-dessus du banc de chariot (14) et l'autre chariot (34) étant agencé au-dessous du banc de chariot, et en ce que les zones, pourvues des deux guidages Z (24, 26) pour l'un des chariots (28), de l'un des côtés longitudinaux (18) du banc de chariot (14) s'étendent parallèlement l'une à l'autre et également parallèlement aux zones, pourvues des deux guidages Z (30, 32) pour l'autre chariot (34), de l'autre côté longitudinal (20) du banc de chariot (14) et transversalement au plan d'enlèvement de copeaux (16).

2. Tour selon la revendication 1, caractérisé en ce que le banc de chariot (14) comporte sur ses côtés longitudinaux (18, 20) portant les deux chariots (28, 34) des surfaces de fixation planes (210) qui s'étendent en direction de l'axe Z (80) et sur lesquelles sont fixés les guidages Z (24, 26, 30, 32 ; 30'), toutes ces surfaces de fixation (210) s'étendant transversalement au plan d'enlèvement de copeaux (16) et parallèlement les unes aux autres.

3. Tour selon l'une ou l'autre des revendications 1 et 2, caractérisé en ce que, vus perpendiculairement sur le plan d'enlèvement de copeaux (16), les deux guidages Z (24, 26, 30, 32) de l'un au moins des deux chariots (28, 34) sont agencés à distance l'un de l'autre en direction de l'axe X, de telle sorte que les guidages Z (26, 32), présentant la plus grande distance depuis le plan d'enlèvement de copeaux (16), des deux chariots (28, 34) présentent une distance plus grande l'un de l'autre en direction de l'axe X que les guidages Z (24, 30), situés plus proches du plan d'enlèvement de copeaux (16), de ces deux chariots.

4. Tour selon l'une ou plusieurs des revendications précédentes, caractérisé en ce que la poupée porte-broche (68) est fixée sur le banc de chariot (14), ce dernier comprenant, vu en direction de l'axe X, des surfaces de fixation (74) planes des deux côtés de l'axe de broche (80) qui s'étendent parallèlement l'une à l'autre et transversalement au plan d'enlèvement de copeaux (16) et sur lesquelles repose la poupée porte-broche (68).

5. Tour selon la revendication 4, caractérisé en ce que la poupée porte-broche (68) est pourvue, des deux côtés de l'axe de broche (80), d'éléments de fixation (72) en saillie vers l'extérieur qui reposent sur les surfaces de fixation (74) du banc de chariot (14), et en ce que ces éléments de fixation (72) et l'axe de broche (80) se trouvent dans un plan commun.

6. Tour selon l'une ou l'autre des revendications 4 et 5, caractérisé en ce que la poupée porte-broche (68) s'appuie uniquement par ses éléments de fixation (72) sur le banc de chariot (14), et en ce que dans la zone située entre les éléments de fixation (72) est prévue une fente d'air (94) entre le banc de chariot (14) et la poupée porte-broche (68).

7. Tour selon la revendication 6, caractérisé en ce que la fente d'air (94) est ouverte au niveau de ses deux extrémités longitudinales.

8. Tour selon l'une ou plusieurs des revendications 2 à 7, caractérisé en ce que les surfaces de fixation s'étendent perpendiculairement au plan d'enlèvement de copeaux (16).

9. Tour selon l'une ou plusieurs des revendications 1 à 8, caractérisé en ce que sur le côté, détourné de l'axe de broche (80), du chariot inférieur (34) est agencé un bras (86) dirigé en éloignement du plan d'enlèvement de copeaux (16), qui porte au moins une ligne d'alimentation en énergie.

10. Tour selon la revendication 9, caractérisé en ce qu'il est prévu, entre la base (10) et le banc de chariot (14), une ouverture oblongue (88) qui s'étend en direction de l'axe Z (80) et qui est traversée par le bras (86).

11. Tour selon l'une ou plusieurs des revendications précédentes, caractérisé en ce que l'un au moins des deux chariots (28, 34) forme un boîtier pour recevoir au moins une partie de machine (42, 44).

12. Tour selon la revendication 11, caractérisé en ce que les deux chariots (28, 34) forment des boîtiers pour recevoir des parties de machine (42, 44).

13. Tour selon l'une ou l'autre des revendications 11 et 12, caractérisé en ce que le boîtier reçoit un moteur d'entraînement (42, 44) destiné à déplacer un autre chariot (38, 40) porté par le chariot (28, 34).
